# EUROPÄISCHE PATENTANMELDUNG

(11) **EP 1 110 654 A1**
(43) Veröffentlichungstag der Anmeldung: **27.06.2001**
(21) Anmeldenummer: 99121030.3
(22) Anmeldetag: 21.10.1999
(51) Int. Cl.: B23K 1/005

(54) **Verfahren un Vorrichtung zum selektiven Erwärmen von Bauelementen**

(71) Anmelder: Leister Process Technologies, 6060 Sarnen (CH)
(72) Erfinder: Chen, Jie-Wei, 6055 Alpnach Dorf (CH); Leister, Christiane, 6063 Stalden (CH)
(74) Vertreter: Klocke, Peter, Dipl.-Ing.

(57) **Zusammenfassung**

Verfahren und Vorrichtung zur Verbindung oder Trennen von mindestens zwei Bauelementen mittels Laserstrahlung, wobei zwischen der Laserquelle und den Erwärmungsbereichen der Bauelemente ein Optiksystem angeordnet wird, das den linienförmigen oder flächenförmigen Laserstrahl in mehrere punktförmige Laserstrahlen umformt. Alle Erwärmungsbereiche werden mittels der punktförmigen Laserstrahlen gleichzeitig erwärmt und miteinander verbunden. Der Laserstrahl kann dabei auch relativ zu den Bauelementen bewegt werden und umgekehrt, wobei die Laserquelle nur eingeschaltet wird, wenn der Laserstrahl bzw. die Laserpunkte sich an den Erwärmungsbereichen befinden. Dieses Verfahren und die Vorrichtung erlaubt das kostengünstige, schnelle und präzise Verbindung und Entfernen von Bauelementen insbesondere mit metallischen Anschlüssen auf einer Leiterplatte, wobei gleichzeitig eine universelle Anpassung bei Veränderung der Abmessungen möglich ist.

## Beschreibung

Die vorliegende Erfindung betrifft ein Verfahren zum selektiven Erwärmen von mindestens zwei Bauelementen mittels Laserstrahlen, um die Bauelemente entweder miteinander zu Verbinden oder auch zu Trennen. Sie betrifft außerdem eine Vorrichtung zur Durchführung des Verfahrens.

Beim Aufbringen oder Entfernen beipielsweise von SMD-Halbleiterbauelementen (Surface Mount Device) auf einem Träger ist es bekannt, diese mittels Laserstrahlen mit den Leiterzügen auf oder in einer Leiterplatte zu erwärmen. Die Verbindung kann dabei mittels eines Lotes oder auch nur durch entsprechende Erwärmung der Fügepartner ohne Lot erfolgen (sog. Mikrofügen). Die Erwärmung der Füße der Halbleiterbauelemente sowie der entsprechenden Stelle auf der Leiterplatte erfolgt teilweise bereits mittels eines punktuellen Laserstrahls, wobei dieser entweder von einem Lötpunkt zum nächsten wandert oder in dem mehrere Laserquellen eingesetzt werden, die gleichzeitig die Verbindungsstellen erwärmen.

In der US 5 196 667 wird eine Einrichtung zum Ver- und Entlöten von elektronischen Bauelementen beschrieben, bei der ein heißer Gasstrom oder IR-Strahlung auf die Verbindungen der Bauelemente gerichtet wird, wobei eine Maske verwendet wird, die Öffnungen aufweist, die genau der zu schweißenden Konfiguration entsprechen. Zum Schutz der Maske vor der Wärmestrahlung sind zusätzlich Schilder mit geringer Wärmeleitfähigkeit vorgesehen. Der Abstand der Maske von der Wärmequelle sowie die Stellung der Maskenöffnung gegenüber der Wärmequelle kann verändert werden.

Aus der EP 0 315 228 B1 ist bekannt, elektronische Bauelemente mit einem Träger zu verlöten, indem die Lötverbindungen mittels einer Wärmequelle, beispielsweise Warmluftstrahl und/oder Infrarotstrahl bestrahlt werden. Zur Begrenzung dieses Strahls ist eine Maske mit Abstand von der Wärmequelle angeordnet, die Ausnehmungen aufweist, die den zu verlötenden Anschlußflächen entsprechen.

Aus der Veröffentlichung "Laserstrahlunterstützes Reflow-Löten für räumlich spritzgegossene Schaltungsträger (3-D MID)" der Universität Erlangen von Thomas Fröhlich, Stefan Hierl und Wolfgang Hirt, 1997 ist bekannt, Laserstrahlen zum Löten von SMDs zu verwenden, wobei auch Lichtlinien verwendet werden, deren Linienlänge verschiedenen Bauelementgrößen angepaßt werden kann. Als Strahlenquelle werden dort u.a. Diodenlaser angegeben, wobei eingeräumt wird, daß die Laseranwendung die klassischen Massenlöttechniken nicht ersetzen kann.

Der vorliegenden Erfindung liegt die Aufgabe zugrunde, eine verbesserte Möglichkeit vorzuschlagen, mit der eine Erwärmung zum Zwecke der Verbindung oder Trennung von mindestens zwei Bauelementen gleicher oder unterschiedlicher Materialien, auch Metall, Legierungen, Kunststoff, Keramik, organische oder nicht organische Substanzen erzielt werden kann und die auch den Einsatz in Großserien erlaubt.

Diese Aufgabe wird erfindungsgemäß durch ein Verfahren mit den Merkmalen des Hauptanspruchs gelöst. Weitere vorteilhafte Ausgestaltungen sind den Unteransprüchen zu entnehmen.

Gemäß dem Verfahren werden aus einem von mindestens einer Srahlenquelle ausgesandten linienförmigen oder flächenförmigen Laserstrahl gleichzeitig mehrere Laserstrahlen erzeugt und diese simultan als Laserpunkte auf mehrere zu erwärmende Bereiche fokussiert und die Bauelemente an den erwärmten Bereichen miteinander verbunden oder getrennt. Zur Erzeugung des Laserstrahls werden vorzugsweise Halbleiterlaser mit einer oder mehreren in einer Linie angeordneten Laserdioden verwendet. Dabei kann, je nach Anwendungsfall und Wirtschaftlichkeit der dazu einzusetzenden Anordnung, der Laserstrahl sich relativ zu den Bauelementen bewegen, wobei die Laserquelle entsprechend ein- und ausgeschaltet wird, um unerwünschte Erwärmungen der Bauelemente zu vermeiden. Die Relativbewegung zwischen dem Laserstrahl und den Bauelementen kann bei feststehendem Laserstrahl mittels eines Bewegungselements durch Verfahren der Bauelemente bewirkt werden. Insbesondere bei kleineren zu erwärmenden Flächen kann bei feststehenden Bauelementen eine entsprechende Bewegung der Laserquelle parallel zu den Bauelementen durchgeführt werden. Der Laserstrahl wird mittels einer Optik in einzelne Laserstrahlen, die im wesentlichen punktförmig auf die zu erwärmenden Bereiche fokussiert werden, aufgeteilt. Je nach Erfordernis können durch die geeignete Auswahl optischer Bauelemente die punktförmigen Laserstrahlen mit regelmäßigen und gleichen oder mit ungleichmäßigen Abständen erzeugt werden. Hierzu bieten sich als optische Bauelemente diffraktive, refraktive oder mikro-optische Bauelemente an. Dabei handelt es sich um Glaslinsen oder Kunststofflinsen mit einer Strukturierung im Mikro- und Nanometerbereich, die je nach Ausbildung in bekannter Art und Weise Beugungs- und/oder Brechungseffekte bewirken und den Laserstrahl entsprechend ablenken und/oder streuen.

Durch die Verwendung eines Halbleiterlasers mit entsprechender Optik kann ein vorhangartiger Laserstrahl mit einem länglichen Querschnitt erzeugt werden. Durch einen trapezförmigen Laserstrahl, wie er durch entsprechende Optik bei einem Halbleiterlaser ausbildbar ist, kann leicht die Linienlänge beeinflußt und auf geänderte Abmessungen eingestellt werden. Dies kann derart erfolgen, daß die sog. schnelle axiale Richtung der von einem Halbleiterlaser erzeugten Strahlen kollimiert und in der sog. langsamen axialen Richtung die Strahlen mit kleinem Divergenzwinkel umgeformt werden.

Es kann gemäß einer weiteren vorteilhaften Ausgestaltung des Verfahrens durch Abstandsveränderung zwischen zwei um 90° gedrehten Zylinderlinsen, die zwischen der Laserquelle und den zu verbindenden Bauelementen angeordnet sind, die Linienlänge der Laserstrahlen beeinflußt werden (Zoom-Optik). Dabei wird die volle zur Verfügung stehende Energie ausgenutzt. Zusätzlich oder alternativ können mittels einer geeigneten Optik gleichzeitig mehrere Laserpunkte erzeugt werden, die den zugehörigen zu erwärmenden Bereichen der Bauelemente entsprechen.

Gemäß einer besonders bevorzugten Ausführungsform kann die Relativbewegung insbesondere bei der simultanen Verbindung mehrerer Bereiche der Komponenten durch um eine, vorzugsweise parallel zu den zu erwärmenden Bauelementen bzw. einer Auflagefläche für die Bauelemente verlaufende Achse schwenk- oder drehbare Spiegel oder andere geeignete Einrichtungen, z. B. Lineartisch, erzeugt werden. Für eine optimale Energienutzung und zur Vermeidung von unerwünschter Erwärmung der Bauelemente wird die Strahlenquelle nur zur Bestrahlung der zu erwärmenden Bereiche aktiviert. Bei der Verwendung mehrer im Querschnitt länglichen Laserstrahlen mit jeweils vorzugsweise einer Gesamtlinienlänge in einer Linie, die mindestens der Gesamtlänge der einzelnen punktförmig erwärmten Erwärmungsbereiche (z.B. Anschlußflächenreihe eines elektronischen Bauelements auf einem Träger) entspricht, können gleichzeitig mehrere Erwärmungsbereiche bestrahlt und erwärmt werden, was sich durch eine besonders hohe Verbindungsgeschwindigkeit auszeichnet. Es werden beispielsweise die zu dem jeweiligen Bauelement gehörenden parallelen Anschlußreihen gleichzeitig bestrahlt. Dies kann je nach Bauelement unterschiedlich sein und alle vier Seiten eines rechteckförmigen Bauelements oder auch einzelne gesonderte Bauelemente betreffen. Damit ist eine gezielte Auswahl der zu erwärmenden Bereiche möglich. Ein ggf. vorgesehener Verbindungsstoff, beispielsweise Lot, zwischen den Bauelementen (z.B. Anschlüssen und dem Trägermaterial) wird dabei selbstverständlich mit erwärmt.

Mittels dieses Verfahrens ist es somit möglich, mit hoher Taktgeschwindigkeit und einfacher Anpassung auf verschiedene Abmessungen der Bauelemente, jedoch variabel an verschiedene Anforderungen, ein Verbinden vorzunehmen, da die an mehreren Stellen (gleichzeitig) präzise verbunden oder getrennt werden können. Dies ist insbesondere bei der Anwendung des Verfahrens zum Verbinden und Trennen von Bauelementen (Halbleiterbauelementen) mit metallischen Anschlüssen von Vorteil. Es können durch das erfindungsgemäße Verfahren die Baukosten für eine entsprechende Anlage ebenfalls erheblich reduziert werden. Außerdem wird die zur Verfügung stehende Leistung optimal ausgenutzt, da nur die tatsächlich zu erwärmenden Bereiche und nicht zusätzlich die Umgebung erwärmt werden.

Besonders vorteilhaft ist, wenn in Abhängigkeit der maximalen Leistung der Laserquelle zur Erwärmung der Verbindung auf die erforderliche Verbindungstemperatur die Taktzeit, innerhalb der die Anschlüsse eines Halbleiterbauelements bestrahlt werden, möglichst kurz gehalten wird. Dies kann entweder durch eine entsprechend schnelle Bewegung des Laserstrahls oder durch entsprechd kurzes Belichten erfolgen. Durch die kurze Erwärmung mit möglichst hoher Energie wird ein Ableiten der Wärme in die Beinchen des Halbleiterbauelements verhindert und darüber hinaus der gesamte Bearbeitungsprozeß forciert.

Die Aufgabe wird außerdem durch eine entsprechende Vorrichtung mit den Merkmalen des Anspruchs 6 gelöst. Weitere vorteilhafte Ausgestaltungen sind den darauf rückbezogenen Unteransprüchen zu entnehmen.

Die Vorrichtung weist zwischen der Laserquelle und den Bauelementen ein Optiksystem zur gleichzeitigen Formung und Fokussierung mehrerer Laserpunkte aus dem vom der Laserquelle erzeugten linienförmigen Laserstrahl auf den Bauelementen an den zu erwärmenden Bereichen auf. Zur Erwärmung nur einzelner Punkte weist das Optiksystem mit diffraktiven, refraktive oder mikro-optische Bauelementen auf, die mehrere Laserstrahlpunkte erzeugt. Diese Umformungsoptik kann auch vollflächig bestrahlt werden und die Strahlung wird dann in einzelne Laserstrahlpunkte in der gewünschten Form umwandelt. Dabei können die Abstände gleichmäßig oder durch entsprechende optische Bauelemente ungleichmäßig sein. Diese Laserpunkte werden auf die zugeordneten zu erwärmenden Bereiche gerichtet.

Die Vorrichtung umfaßt gemäß einer bevorzugten Ausbildung auch eine Steuereinrichtung, die die Laserquelle in Abhängigkeit von der Drehstellung eines Spiegels, der den Laserstrahl relativ zu den Bauelementen bewegt, nur bei bestimmten Stellungen des Spiegels einschaltet.

In einer weiteren bevorzugten Ausbildung der Vorrichtung ist zwischen der Laserquelle und den Bauelementen ein Optiksystem zur Telezentrierung des linienförmigen Laserstrahls angeordnet. So kann eine Zylinderlinse vorgesehen sein, die dazu dient, daß die Laserstrahlung nach der Linse ständig senkrecht auf die weitere optische Ebene trifft. Dadurch kann die Distanz zwischen Laserquelle und den optischen Bauelementen zur Erzeugung der punktförmigen Laserstrahlen wesentlich verkürzt werden. Ohne Zylinderlinse wird ein gewisser minimaler Abstand zwischen Laserquelle bzw Umlenkspiegel und optischem Bauelement gefordert, um unerwünscht Winkeleffekte zu vermeiden.

Zwischen dem Optiksystem, das für die Strahlumformung sorgt, und der zu bearbeitenden Bauelemente kann noch Zoom-optik eingesetzt werden. Dadurch können die geformten Strahlfiguren ohne Energieverlust linear vergrößert oder verkleinert werden.

Das Verfahren und die Vorrichtung ermöglichen die Verbindung und die Trennung von verschiedenen Bauelementen sowie von verschiedenen Verbindungsarten, wie beispielsweise rein metallische Verbindungen, Verbindungen zwischen einem aktiven bzw. passiven Halbleiterbauelement und einem Träger, oder von Durchsteckverbindung sowie Verbindungen zwischen Baulementen verschiedenster Werkstoffe. Dabei kann mit hoher Präzision und Schnelligkeit durch optimale Ausnutzung der zur Verfügung stehenden Energie die gewünschte Erwärmung erreicht werden.

Nachfolgend wird die Erfindung anhand von Ausführungsbeispielen in Verbindung mit den begleitenden Zeichnungen näher erläutert. Es stellen dar:
- Figur 1: eine prinzipiell perspektivische Darstellung einer Vorrichtung zum simultanen Verbinden oder Trennen von Bauelementen mit metallischen Anschlüssen an einen Träger mit vier Laserquellen zur Erzeugung eines linienförmigen Laserstrahls und diffraktiver Optik,
- Figur 2: eine prinzipielle perspektivische Darstellung einer Vorrichtung mit einem Halbleiterlaserstapel zur Erzeugung einer rechteckförmigen flächigen Beleuchtung, Optik zur Kollimation des Laserstrahls und diffraktiver Optik zur Umformung des Laserstrahls,
- Figur 3: eine prinzipielle perspektivische Darstellung einer Vorrichtung mit einem beweglichen Umlenkspiegel, Optik zur Formung des Laserstrahls und diffraktiver Optik,
- Figur 4: eine prinzipielle perspektivische Darstellung einer Vorrichtung mit einem beweglichen Umlenkspiegel, Optik zur Formung des Laserstrahls und diffraktiver Optik zur Erzeugung von Laserpunkten mit unterschiedlichen Abständen aus den einzelnen Laserlinien, und
- Figur 5: die prinzipielle perspektivische Darstellung gemäß Figur 3 mit einer zusätzlichen Zoom-Optik.

Im Nachfolgenden wird die Erfindung in Verbindung mit SMD-Bauelementen erläutert, weil sie sich hierzu besonders eignet. Grundsätzlich ist sie jedoch nicht auf diese Anwendung beschränkt und kann in Verbindung mit anderen Bauelementen eingesetzt werden. Ebenso sind die Vorrichtungen in Verbindung mit diffraktiven optischen Bauelementen dargestellt und erläutert. Entsprechen können statt dessen auch refraktive oder mikro-optische Bauelemente eingesetzt werden.

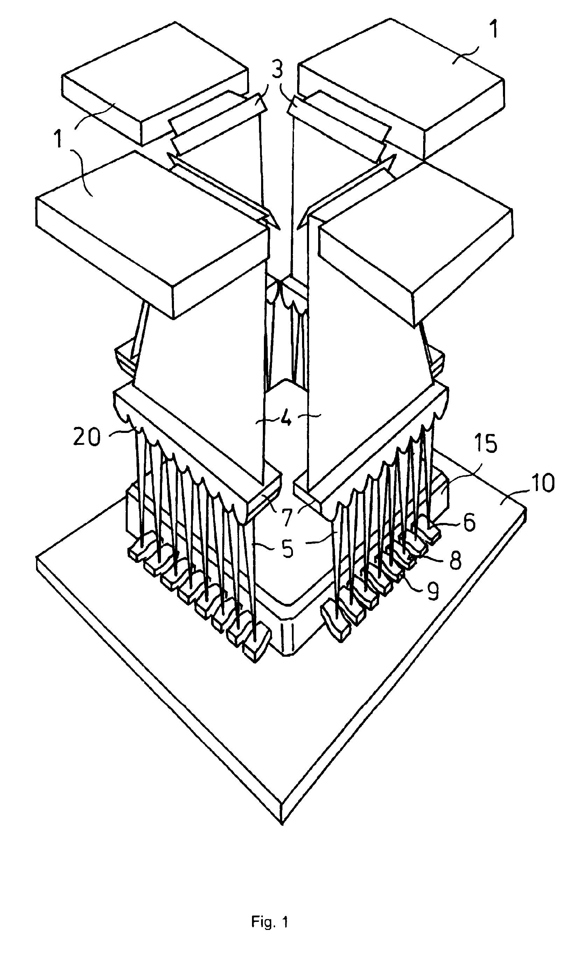

In Figur 1 sind vier Laserquellen 1, beispielsweise jeweils ein oder mehrere in Linie angeordnete Halbleiterlaser (Diodenlaser), deren emittierte Laserstrahlung mit einer entsprechenden Optik 3 (z.B. Linsen, Spiegel) kollimiert wird, dargestellt ist. Der von dem Spiegel 3 umgelenkte Laserstrahl 4 gelangt auf ein diffraktives optisches Bauelement 7, das aus der Laserlinie 4 einzelnen Laserstrahlen 5 erzeugt, die als Laserpunkte 6 auf der Erwärmungsfläche 8 der Beinchen 9 eines SMD-Halbleiterbauelements 15 auftreffen. Die Laserpunkte 6 erwärmen die Beinchen 9 im Bereich der Erwärmungsfläche 8 sowie die darunterliegende Anschlußfläche einer nicht dargestellten der Leiterbahn auf einer Leiterplatte 10 als Träger. Das diffraktive optische Bauelement 7 in Form einer Linse weist gleichmäßige konvexe Bereiche 20 quer zum vorhangartigen Laserstrahl 4 auf, die die Aufteilung in die einzelnen Laserstrahlen 5 bewirken.

Somit findet eine gleichzeitige Verbindung und Trennung aller Beinchen 9 mit der der Leiterbahn statt, wobei eine entsprechende nicht dargestellte Steuerung dafür sorgt, daß ein gleichzeitiges Takten der Laserquellen erfolgt. Selbstverständlich kann auch mit nur einer Laserquelle 1 gearbeitet werden, wobei durch eine entsprechende Optik die benötigte Anzahl weiterer Laserstrahllinien erzeugt wird. Damit ist auf jeden Fall die Gleichzeitigkeit beim Bestrahlen gewährleistet.

Als Laserquelle werden in allen Ausführungsbeispielen Laser mit einer Wellenlänge von 0,7 - 10,6 µm eingesetzt. Die erforderliche Leistung richtet sich nach der notwendigen Erwärmungstemperatur für den Verbindungsvorgang sowie die zu erzeugende Linienlänge. Die Prozeßführung beim Löten und Entlöten erfolgt in der an sich bekannten Art und Weise. Dabei können die Teile beispielsweise vorgewärmt und dann der abschließende Löt- oder Entlötvorgang mit dem Laserstrahl durchgeführt werden.

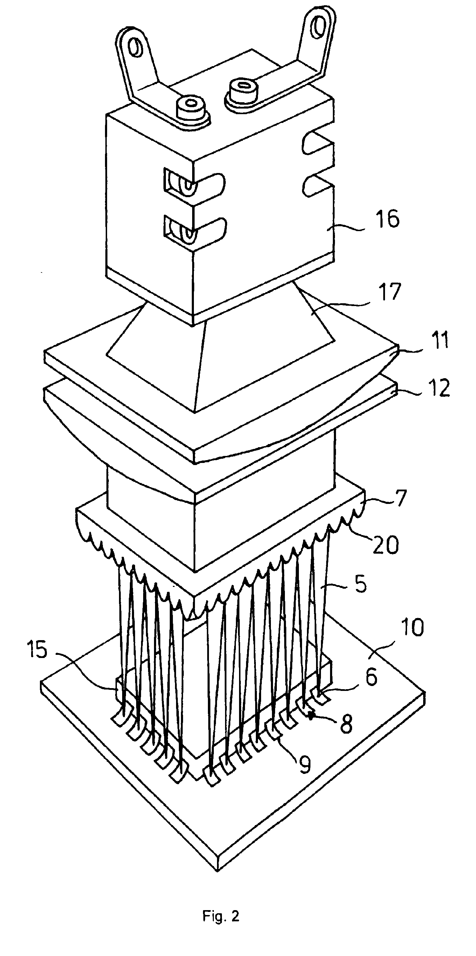

Figur 2 zeigt einen simultanen Lötvorgang mit einem Diodenlaser-Stack 16 der eine rechteckförmige flächige Bestrahlung 17 entsprechend der Form des zu bearbeitenden SMD-Bauteils 15 erzeugt. Diese wird mittels zwei um 90° gegeneinader gedrehte Zylinderlinsen 11 und 12 kollimiert, so daß sie senkrecht auf die nachfolgende diffraktive Linse 7 trifft, die wieder die punktförmigen Laserstrahlen 5 auf der Erwärmungsbereiche 8 erzeugt. Der Diodenlaser-Stack 16 weist mehrere parallele Diodenleisten, beispielsweise 5 bis 10, aus wiederum einzelnen ca 1cm langen Diodenlaser mit 25 oder 48 Emittern. Die einzeln Laser weisen eine hohe Divergenz auf und bilden unkollimiert eine bestrahlte Fläche, die sich mit den anderen Flächen benachbarter Diodenleisten überlagern. Dadurch können einige kW Leistung auf einer Fläche erzeugt werden.

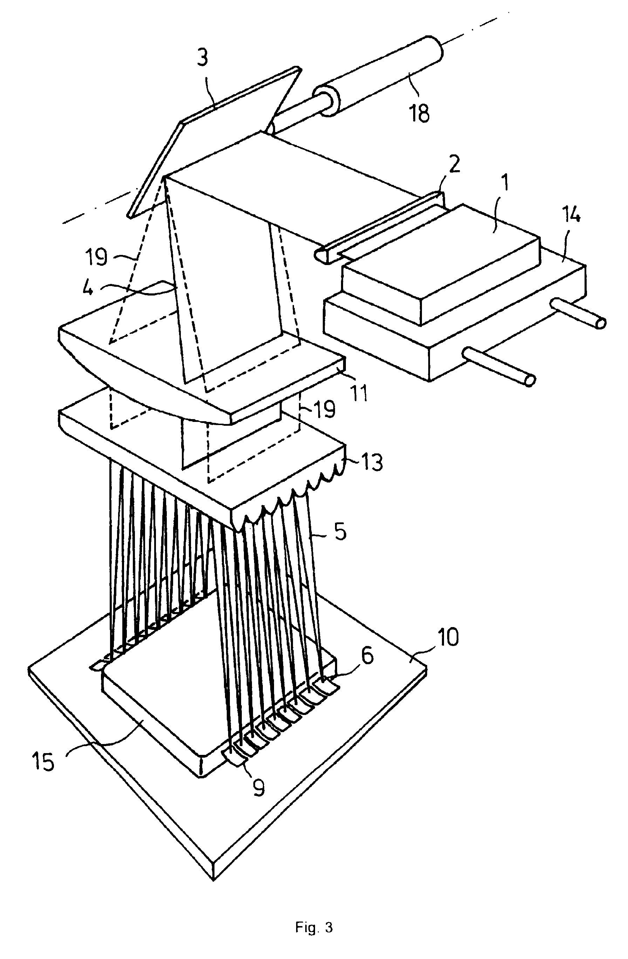

Figur 3 zeigt den prinzipiellen Aufbau einer Vorrichtung mit einem um eine Achse parallel zum SMD-Bauelement 15 und Träger 10 angeordneten Spiegel 3 zur Erzeugung einer bewegten Laserlinie 4. Der Spiegel 3, der mittels eines Antriebs 18 sehr schnell verstellt werden kann, bewirkt die Bewegung des Laserstrahls 4 über die Zylinderlinse 11. Dieses Verfahren und diese Vorrichtung erlauben eine hohe Bestrahlungsgeschwindigkeit und Taktzeit, ohne daß aufwendige Bewegungsmechanismen, z.B. Lineartisch, insbesondere bei kleinen Abmessungen, einzelnen zu verbindenden Komponenten oder simultanen Löten und Entlöten erforderlich sind. Hierzu wird die Laserquelle 1 ebenfalls oberhalb der Fügepartner angeordnet und ein vorhangähnlicher Laserstrahl 4 mittels einer dafür üblichen Linse 2 erzeugt. Dies erfolgt in bekannter Art und Weise derart, daß die sog. schnelle axiale Richtung der von einem Halbleiterlaser erzeugten Strahlen kollimiert und in der sog. langsamen axialen Richtung die Strahlen mit kleinem Divergenzwinkel umgeformt werden. Durch die Veränderung des Arbeitsabstandes kann die Länge dieser Laserlinie an die Gesamtlänge der beabstandeten Laserpunkte 6 Anschlußflächenreihe angepaßt werden, wobei dies auch noch durch die Ausgestaltung der Diffraktivlinse 7 beeinflußt wird. Durch Änderung der Leistung der Laserquelle erfolgt dann eine Anpassung an die minimale erforderliche Verbindungstemperatur. Zusätzlich ist noch eine Zylinderlinse 11 in dem Strahlengang angeordnet, die dafür sorgt, daß die Laserstrahlung senkrecht auf das diffraktive optische Bauelement 7 auftrifft. Die gestrichelten Linien 19 geben die Positionen an, wo mittels einer Steuereinrichtung 14 in Abhängigkeit von der über den Antrieb 18 mitgeteilten Drehstellung des Spiegels 3 die Laserquelle 1 freigegeben wird. Dazwischen wird die Laserleistung abgeschaltet. Die Endpositionen 19 können auch als Wendepunkte bei bewegten Drehspiegeln 3 bezeichnet werden, an denen die Laserleistung freigegeben wird. Anstatt eines Drehspiegels kann auch - aber weniger schnell und daher bei den meisten Anwendungen nachteilhaft - ein xy-Tisch verwendet werden.

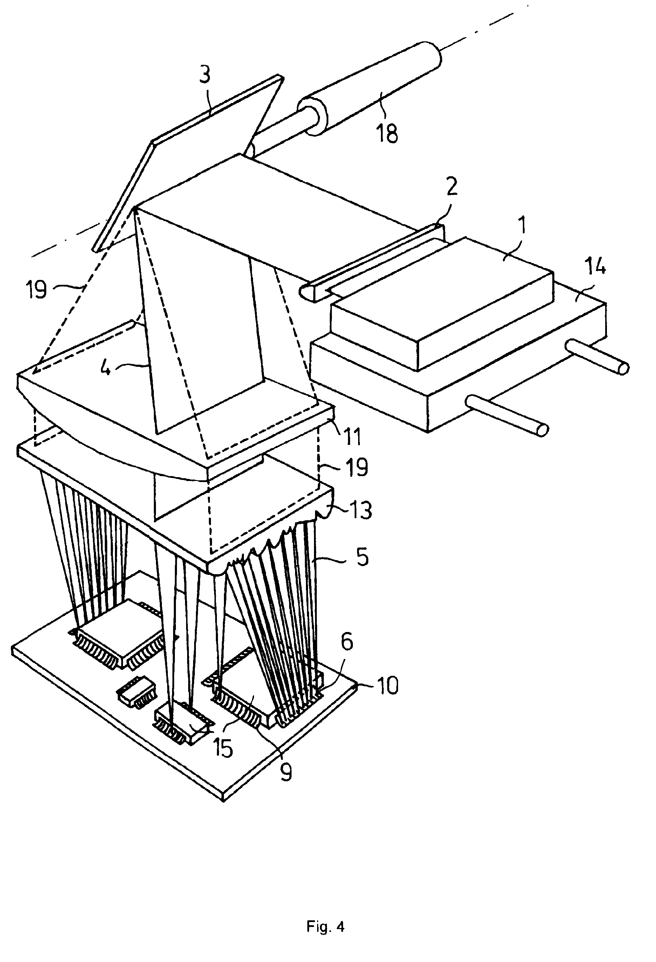

Gemäß der Ausführung in Figur 4 ist, wie in den anderen Ausführungsbeispielen auch eine Beugungsoptik in Form einer Beugungslinse 13 vorgesehen. Durch die Abbildung der Beugungslinse 13 mit unterschiedlich geformten konvexen Bereichen 20 erzeugt diese aus einer Laserstrahllinie punktförmige Laserstrahlen 5 mit unterschiedlichen Abständen. Die Figur zeigt, daß auch mit einem komplizierten diffraktiven Optiksystem, das speziell für eine gesamte Leiterplatte konstruirt ist, auch alle SMD-Bauelemente gleichzeitig gelötet werden können. Diese diffraktive Linse 13 liefert eine ortsabhängige Strahlungsumformung, so daß nur die gewünschten Stellen bestrahlt werden, wenn gleichzeitig die Laserquelle 1 entsprechend eingeschaltet wird.

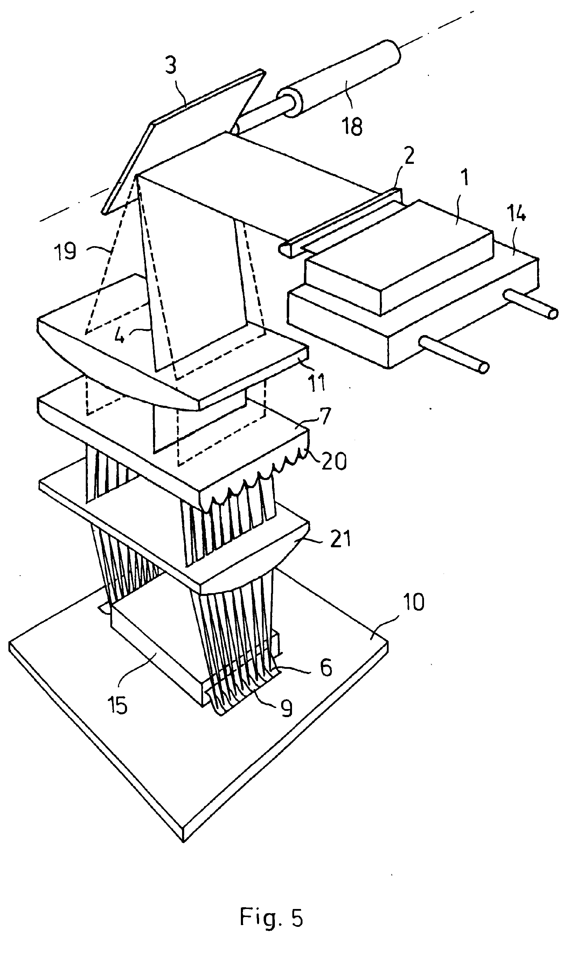

In der Figur 5 ist beispielhaft für alle Ausführungsarten die Anordnung gemäß Figur 3 mit einer Zylinderlinse 21, die um 90° gedreht ist, versehen. Mittels dieser Zoom-Optik zwischen der Diffraktivlinse 7 und den zu verbindenden Bauelementen können durch Abstandsänderung verlustfrei die Abstände der Strahlpunkte 6 linear eingestellt werden, um diese an unterschiedliche Größen des Bauteils 15 anzupassen.

Die in den vorstehenden Ausführungsbeispielen angegebenen diffraktiven oder auch refraktiven Bauelemente sind übliche im Handel erhältliche Artikel.

## Patentansprüche

1. Verfahren zum selektiven Erwärmen von mindestens zwei Bauelementen (9, 10) mittels Laserstrahlen (4), die die auf zu erwärmenden Bereiche der Bauelemente zum Verbinden oder Trennen der Bauelemente an den erwärmten Bereiche gerichtet werden, **dadurch gekennzeichnet,** daß aus einem von mindestens einer Srahlenquelle (1) ausgesandten linienförmigen oder flächenförmigen Laserstrahl (4) gleichzeitig mehrere Laserstrahlen (5) erzeugt und diese simultan als Laserpunkte (6) auf mehrere zu erwärmende Bereiche (8) fokussiert und die Bauelemente (9, 10) an den erwärmten Bereichen miteinander verbunden oder getrennt werden.

2. Verfahren nach Anspruch 1, **dadurch gekennzeichnet,** daß mittels einer Zoom-Optik (11, 12) unterschiedliche Laserstrahldimensionen erzeugt werden.

3. Verfahren nach Anspruch 1 oder 2, **dadurch gekennzeichnet,** daß zwischen dem linienförmigen Laserstrahl (4) und den Bauelementen (9, 10) eine Relativbewegung durchgeführt und die Strahlenquelle (1) nur zur Bestrahlung der zu erwärmenden Bereiche (8) aktiviert wird.

4. Verfahren nach Anspruch 3, **dadurch gekennzeichnet,** daß der linienförmige Laserstrahl (4) mittels eines beweglichen Umlenkspiegels (3) relativ zu den Bauelementen (9, 10) bewegt wird.

5. Verfahren nach einem der vorangegangenen Ansprüche, **dadurch gekennzeichnet,** daß entsprechend der maximalen Leistung der Laserquelle (1) zur Erwärmung der zu erwärmenden Bereiche (8) auf die erforderliche Verbindungstemperatur die Taktzeit möglichst kurz gewählt wird.

6. Vorrichtung zum selektiven Verbinden oder Trennen von mindestens zwei Bauelementen (9, 10) mittels mindestens einer Laserquelle, deren Laserstrahlen (4) auf zu erwärmenden Bereiche (8) der Bauelemente zum Verbinden oder Trennen der Bauelemente gelangen, **dadurch gekennzeichnet,** daß zwischen der Laserquelle (1) und den Bauelementen (9, 10) ein Optiksystem (7, 11, 12, 13) zur gleichzeitigen Formung und Fokussierung mehrerer Laserpunkte (6) aus dem von der Laserquelle (1) erzeugten linienförmigen oder flächenförmigen Laserstrahl (4) auf den Bauelementen (9, 10) an den zu erwärmenden Bereichen angeordnet ist.

7. Vorrichtung nach Anspruch 6, **dadurch gekennzeichnet,** daß eine Zoom-Optik (21) zwischen dem Optiksystem und den Bauelementen (9, 10) zur Einstellung Laserstrahldimension angeordnet ist.

8. Vorrichtung nach Anspruch 6 oder 7, **dadurch gekennzeichnet,** daß zur Relativbewegung zwischen der Laserquelle (1) und den Bauelementen (9, 10) zwischen der Laserquelle (1) und dem Optiksystem (7, 11, 12, 13) ein schwenk- oder drehbarer Spiegel (15) angeordnet ist, der mittels eines Antriebs (18) betätigbar ist, und eine Steuereinrichtung (14), die die Laserquelle (1) in Abhängigkeit von der Drehstellung des Spiegels (15) nur bei bestimmten Stellungen des Spiegels (15) einschaltet.
